# EUROPÄISCHE PATENTSCHRIFT

(11) **EP 0 679 022 B1**
(45) Veröffentlichungstag und Bekanntmachung des Hinweises auf die Patenterteilung: **27.10.1999**
(21) Anmeldenummer: 95105050.9
(22) Anmeldetag: 04.04.1995
(51) Int. Cl.: H04N 5/44

(54) **Verfahren zur Umsetzung einer Bildfolge von Halbbildern mit Zeilensprung auf eine Bildfolge von zeilensprungfreien Bildern und Schaltungsanordnung zur Durchführung des Verfahrens**
Method for converting a sequence of interlaced picture frames into a sequence of non-interlaced pictures and device for implementing such a method
Procédé pour convertir une séquence de trames d'images entrelacées en une séquence d'images non-entrelacées et dispositif pour la mise en oeuvre de ce procédé

(30) Priorität: 22.04.1994 DE 4414173
(43) Veröffentlichungstag der Anmeldung: 25.10.1995
(73) Patentinhaber: SIEMENS AKTIENGESELLSCHAFT, 80333 München (DE)
(72) Erfinder: Blume, Holger, Dipl.-Ing., D-44793 Bochum (DE); Schwörer, Ludwig, Dipl.-Ing., D-44143 Dortmund (DE)

(56) Entgegenhaltungen:
- EP-A- 0 391 094
- DE-A- 4 201 647
- DE-A- 4 220 662
- US-A- 5 012 326

## Beschreibung

Die Erfindung betrifft ein Verfahren zur Umsetzung einer Bildfolge von Halbbildern mit Zeilensprung auf eine Bildfolge von zeilensprungfreien Bildern. Die Erfindung betrifft außerdem eine Schaltungsanordnung zur Durchführung des Verfahrens und ein Bildwiedergabegerät mit einer solchen Schaltungsanordnung.

Üblicherweise wird bei der Fernsehsignalübertragung eine Bildfolge von Halbbildern übertragen. Aus diesen Halbbildern wird dann im Fernsehgerät ein Bild mit doppelter Zeilenzahl erzeugt. Die Halbbilder weisen einen Zeilensprung auf. Dies bedeutet, daß beispielsweise das erste Halbbild einer Halbbildfolge die geradzahligen Zeilen, das unmittelbar darauffolgende zweite Halbbild die ungeradzahligen Zeilen eines Vollbildes enthält. Wenn die Halbbilder im Fernsehgerät nacheinander zeilenverkämmt mit der empfangenen Halbbildrate im Fernsehempfangsgerät wiedergegeben werden, sieht der Betrachter wegen der Trägheit des menschlichen Auges das Vollbild mit voller vertikaler Auflösung.

Ein auf die bloße Halbbildwiedergabe gestütztes Darstellungsverfahren hat in bezug auf feine darzustellende Strukturen und großflächige Strukturen gewisse Nachteile. Wenn beispielsweise eine Kante im Zeilensprung dargestellt wird, wird sie bei jedem Halbbild von jeweils abwechselnden Zeilen dargestellt. Dies kann zu Kantenflackern führen. Ein weiterer Nachteil der Zeilensprungwiedergabe besteht darin, daß besonders bei vertikal langsam bewegten Bildteilen die Zeilenstruktur eines Bildes sichtbar wird (Zeilenwandern). Zur Lösung dieser Probleme ist es bekannt, anstelle der Darstellung von Halbbildern am Fernsehbildschirm progressive Bilder anzuzeigen, bei denen auch die Zwischenzeilen mit Bildinformation ausgefüllt sind. Diese Bildinformation wird aus den übertragenen Halbbildern ermittelt.

In der deutschen Offenlegungsschrift DE 38 14 570 sind ein Verfahren und eine Schaltungsanordnung zur Flimmerbefreiung für Zeilensprungwiedergabe beschrieben. Die eingangsseitigen Halbbilder werden in einen Höhen- und einen Tiefensignalanteil getrennt. Auf den Höhen- und Tiefensignalanteil werden bewegungsabhängig unterschiedliche Signalverarbeitungsverfahren angewandt. Eine bewegungsadaptive Steuerung sorgt bei großer Bewegungsgeschwindigkeit für eine Umschaltung auf einen Signalverarbeitungszweig, in dem nur eine bewegungsrichtige Verarbeitung durchgeführt wird.

In dem Artikel "Medianfilterung von Videosignalen" von G. Wischermann, Fernseh- und Kinotechnik, 44. Jahrgang, Nr. 12/1990, Seiten 665 bis 670 und 672 sind verschiedene Arten von Medianfiltern beschrieben, die zur Störsignalbefreiung von Videosignalen verwendet werden können.

Aus der US 5,012,326 ist ein System zur Übertragung und zum Empfang von Fernsehsignalen bekannt, bei dem ein nichtzeilenverkämmtes Y-Signal in eine Komponente, die die hochfrequenten Bildanteile enthält und in eine Komponente, die die niedrigfrequenten Bildanteile enthält, getrennt wird. Die erste Komponente wird durch Wiederholung eines Halbbildes in ein zeilenverkämmtes Signal umgewandelt. Aus der anderen Komponente wird durch Verringerung von Zeilen ebenfalls ein zeilenverkämmtes Signal gewonnen.

Die DE 42 01 647 A1 beschreibt eine Interpolations- und Abtastzeilenumsetzschaltung, die die Signale dadurch verarbeitet, daß eine Zeilensprungabtastung in eine fortlaufende Abtastung umgewandelt wird. Die Schaltung interpoliert linear oder über eine Schrägkorrelation die Tiefpaßkomponente vertikaler Richtung und verhindert einen Abfall der Auflösung in vertikaler Richtung dadurch, daß sie längs des ursprünglichen Eingangsbildsignals in Form einer Null-Einfügungsinterpolation für die Hochpaßkomponente abtastet.

Die Aufgabe der vorliegenden Erfindung besteht darin, ein Verfahren anzugeben, das bei einer möglichst großen Qualitätsverbesserung mit möglichst geringem schaltungstechnischem Aufwand realisierbar ist. Eine weitere Aufgabe besteht darin, eine Schaltungsanordnung zur Durchführung des Verfahrens sowie ein Bildwiedergabegerät unter Verwendung dieser Schaltungsanordnung anzugeben.

Die Aufgabe betreffend das Verfahren wird durch die Merkmale des Patentanspruchs 1 gelöst.

Die Aufgabe betreffend die Schaltungsanordnung wird durch die Merkmale des Patentanspruchs 6 gelöst.

Der Patentanspruch 7 bezieht sich auf ein Bildwiedergabegerät, wie z.B. ein Fernsehgerät, das eine erfindungsgemäße Schaltungsanordnung enthält.

Durch die Höhen- und Tiefensignaltrennung liegt für jedes Halbbild der hochfrequente und tieffrequente Bildsignalanteil vor. Der Höhensignalanteil enthält die das Kantenflachern verursachenden Signalanteile, der Tiefensignalanteil die die Bewegungswahrnehmung bestimmenden groben Konturen der bewegten Objekte. Die auf den Höhen- bzw. Tiefensignalanteil ausgeführte Filterung ist speziell auf diese Störeffekte angepaßt. Für das Höhensignal ist deshalb besonders eine zeitlich dominierte Medianfilterung, für das Tiefensignal eine vertikal dominierte Medianfilterung vorgesehen. Ein Medianfilter, das bekanntermaßen den mittleren Signalwert (Median) aus einer zweckmäßigerweise ungeradzahligen Anzahl von Signalwerten auswählt, ist besonders einfach zu realisieren. Ebenfalls sind wenig aufwendige Ausführungen für Trennfilter zur Aufspaltung in Höhen- und Tiefensignal geläufig. Das erfindungsgemäße Verfahren bzw. die erfindungsgemäße Schaltungsanordnung kann deshalb mit vertretbarem schaltungstechnischen Aufwand realisiert werden. Der Qualitätsgewinn für den Betrachter ist relativ hoch, da eine Flimmerreduktion bei bewegungsrichtiger Bilddarstellung durchgeführt wird. Besonders vorteilhaft ist, daß keine bewegungsabhängige Umsteuerung notwendig ist, aber trotzdem eine hohe Wiedergabequalität erreicht wird. Das Feststellen von zwischen zwei Bildern vorliegender Bewegung oder gar die Ermittlung von Bewegungsvektoren ist nicht notwendig.

Die Erfindung wird im folgenden anhand der in der Zeichnung dargestellten Figuren ausführlich erläutert. Es zeigen
- Figur 1: das Blockschaltbild eines Fernsehgerätes mit einer erfindungsgemäßen Schaltungsanordnung zur progressiven Konversion,
- Figur 2: ein Beispiel der Bildpunktauswahl für eine vertikal dominierte Medianfilterung und
- Figur 3: ein Beispiel der Bildpunktauswahl für eine zeitlich dominierte Medianfilterung.

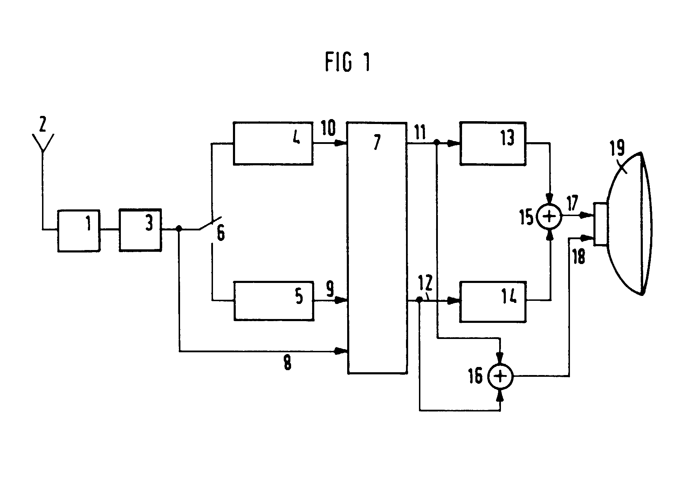

Das Fernsehgerät gemäß Figur 1 enthält einen Tuner 1, dem ein Videosignal aus einer Antenne 2 zugeführt wird. Dem Tuner 1 ist eine Stufe 3 nachgeschaltet, in der ein bei einer Zwischenträgerfrequenz liegendes Signal erzeugt wird, welches dann demoduliert wird. Am Ausgang der Stufe 3 liegt das Videosignal im Basisband vor. In der nachfolgenden Bildsignalverarbeitung wird das Videosignal zur Ansteuerung eines Bildschirms 19 aufbereitet. Daneben werden aus dem Basisbandvideosignal im wesentlichen Horizontal- und Vertikalsynchronimpulse zur Ablenksteuerung der Bildröhre 19 erzeugt (nicht dargestellt). Diese Horizontal- und Zeilensynchronsignale dienen auch als Taktreferenz zur Steuerung der digitalen Signalverarbeitung der nachfolgend beschriebenen Bildsignalverarbeitung. Als Bildröhre 19 ist eine Bildröhre zu verwenden, die zur Darstellung progressiver Bilder geeignet ist. Denkbar wäre auch die Verwendung eines LCD-(Liquid Crystal Display)-Bildschirms. Solche Bildschirme sind im allgemeinen nur für die Wiedergabe progressiver Bilder ausgelegt.

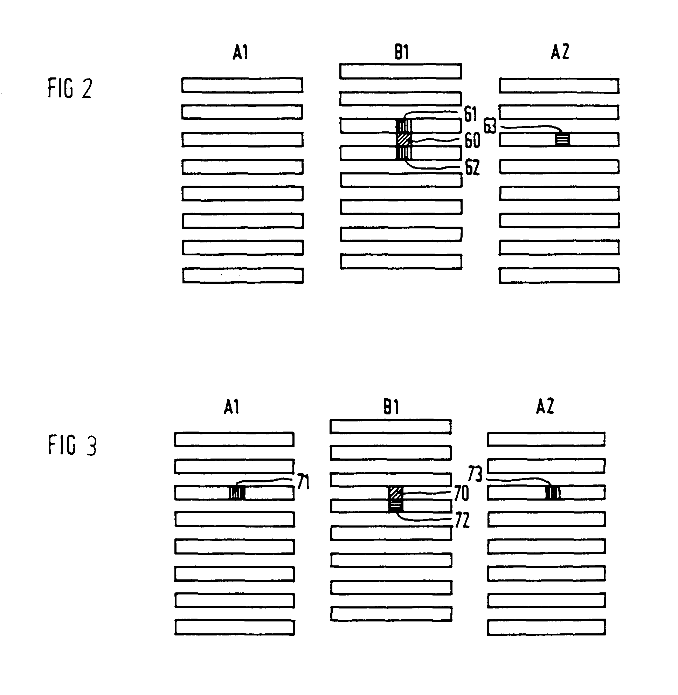

Das am Ausgang der Stufe 3 vorliegende Videosignal enthält eine Folge von Halbbildern mit Zeilensprung A1, B1, A2,... (Figuren 2 und 3). Das Halbbild A1 enthält die geradzahligen Zeilen eines Vollbildes, das Halbbild B1 die ungeradzahligen Zeilen. Das Halbbild A2 des nächsten Vollbildes wiederum weist die gleiche Rasterlage wie das Halbbild A1 auf. Für die nachfolgende Halbbildverarbeitung ist es notwendig, daß Halbbildteile von drei verschiedenen aufeinanderfolgenden Halbbildern, z.B. A1, B1 und A2, gleichzeitig verarbeitet werden. Um dies zu erreichen, sind zwei Halbbildspeicher 4, 5 zur Zwischenspeicherung je eines Halbbildes vorgesehen. Eingangsseitig wird auf die Halbbildspeicher 4, 5 über einen Umschalter 6 zugegriffen. An der nachfolgenden Einrichtung 7, die ein vertikales Trennfilter ist, liegen dann die Signale von drei Halbbildern vor: Die Leitung 8 führt das jüngste Halbbild A2, die Leitung 9 das unmittelbar vorher empfangene Halbbild B1 und die Leitung 10 das wiederum davor empfangene Halbbild A1. Um ein kollisionsfreies Einlesen in den Halbbildspeicher 4 zu ermöglichen, ist es vorteilhaft, vor dem Umschalter 6 einen Zeilenspeicher vorzusehen, so daß im Halbbildspeicher 4 die gerade eingeschriebene und gerade ausgelesene Bildinformation nicht überlappen. Das Einlesen in die Halbbildspeicher 4, 5 erfolgt mit der Bildwiederholfrequenz der empfangenen Halbbildfolge, z.B. 50 Hz (entspricht 13,5 MHz Bildpunktfrequenz). Das Auslesen aus den Halbbildspeichern 4, 5 erfolgt vorteilhafterweise mit doppelter Wiedergabefrequenz, d.h. 100 Hz (entspricht 27 MHz Bildpunktfrequenz), um am Bildschirm 19 eine erhöhte Wiedergabequalität mit einer Bildwiederholrate von 100 Hz zu erhalten. Hierfür ist auch im Signalpfad der Leitung 8 ein Zeilenspeicher notwendig.

Durch das Trennfilter 7 wird nun der Höhen- und Tiefensignalanteil jedes Halbbildes in bezug auf vertikale Bildrichtung ermittelt. Vertikale Richtung bedeutet, daß die Filterung bezüglich der Zeilen ausgeführt wird. An den Leitungen 11, 12 liegen dann die Höhen- bzw. Tiefensignalanteile der jeweiligen Halbbilder A1, B1, A2 vor.

Diese Höhen- und Tiefensignalanteile werden unterschiedlich verarbeitet. Im Höhenkanal wird eine im wesentlichen zeitlich wirkende Medianfilterung durchgeführt. Dieses zeitlich dominierte Medianfilter 13 erzeugt einen neuen Zwischenbildpunkt, der aus Ursprungsbildpunkten ausgewählt wird, die an etwa der gleichen Bildpunktstelle liegen, aber zu zeitlich aufeinanderfolgenden Halbbildern gehören. Mit dem Tiefensignal wird eine im wesentlichen vertikal wirkende Filterung durchgeführt. Dies kann ein vertikal dominiertes Medianfilter sein. Bei der vertikal dominierten Medianfilterung wird der Zwischenbildpunkt aus Ursprungsbildpunkten, die in den unmittelbar angrenzenden Zeilen des gleichen Halbbildes und an der dem neuen Bildpunkt entsprechenden Stelle des davor oder danach kommenden Halbbildes liegen, ermittelt. Da das Flimmern im wesentlichen durch die vertikalen hochfrequenten Bildsignalanteile bestimmt wird, wird im Höhenkanal durch das zeitlich dominierende Medianfilter 13 im wesentlichen das Bildflimmern reduziert. Bewegungen sind meist niedrigfrequent und großflächig. Deshalb sorgt das vertikal dominierte Medianfilter 14 im Tiefenkanal für eine bewegungsrichtige Erzeugung der Zwischenbildpunkte.

Die gefilterten Höhen- und Tiefensignalanteile werden nach den Filtern 13, 14 wieder einander überlagert. Dies kann durch eine einfache Additionsschaltung 15 ausgeführt werden.

Außerdem werden die ungefilterten Höhen- und Tiefensignalanteile zusammengefaßt, um die ursprüngliche Halbbildinformation wieder zu erhalten. Auch dies kann mit einer Additionsschaltung 16 einfach realisiert werden. Die ursprünglichen Halbbildzeilen an der Leitung 18 und die erzeugten Zwischenzeilen an der Leitung 17 werden gemeinsam in einen Bildschirm 19 eingespeist, der für progressive Bilddarstellung geeignet sein muß. Durch das vorgehend beschriebene Verfahren bzw. die Schaltungsanordnung für die Erzeugung eines progressiven Bildes wird eine gute Bewegungswiedergabe mit gleichzeitig guter vertikaler, d.h. zeilenweiser, Auflösung ermöglicht.

Nachfolgend wird die Funktionsweise der Medianfilter 13, 14, erläutert.

Wie bereits oben ausgeführt, kann das Filter 14 ein vertikal dominiertes Medianfilter sein (Figur 2). Der Zwischenbildpunkt 60 wird aus den Ursprungsbildpunkten 61, 62, 63 ermittelt. Die Bildpunkte 61, 62 liegen unmittelbar an den Bildpunkten 60 angrenzend in der darüber- bzw. darunterliegenden Zeile des gleichen Halbbilds B1. Der Bildpunkt 63 wird aus dem nachfolgend empfangenen Halbbild A2 ausgewählt, und zwar an der Stelle, die der Stelle des neu zu berechnenden Bildpunktes 60 entspricht. Das Medianfilter 14 wirkt derart, daß aus den drei Eingangsbildpunktwerten 61, 62, 63 der mittlere Wert ausgewählt wird. Diese Operation ist demnach nichtlinear. Da bei der in Figur 2 beschriebenen Art von Medianfilter die überwiegende Anzahl der Bildpunkte 61, 62 zum gleichen Halbbild B1 gehört vertikal zueinander orientiert ist, spricht man von einem vertikal dominierten Medianfilter.

In der Figur 3 sind die entsprechenden Halbbilddiagramme für das zeitlich dominierte Medianfilter 13 gezeigt. Der neu zu ermittelnde Zwischenbildpunkt 70 wird aus den Ursprungsbildpunkten 71, 72, 73 ermittelt. Die Bildpunkte 71, 73 liegen an den der Stelle des Bildpunktes 70 entsprechenden Stelle der Halbbilder A1, A2. Der Bildpunkt 73 liegt an der der Bildpunktstelle 70 unmittelbar benachbarten Stelle der nachfolgenden Halbbildzeile des gleichen Halbbildes B1. Da die Ursprungsbildpunkte 71, 72, 73 jeweils unterschiedlichen halbbildern entnommen werden, liegt eine im wesentlichen zeitlich wirkende Medianfilterung vor. Da die Bildpunkte 71, 73 der gleichen und nur der Bildpunkt 72 der benachbarten Bildpunktlage jeweils verschiedener Halbbilder entnommen werden, überwiegt im neu zu ermittelnden Bildpunkt 70 die Rasterlage der Bildpunkte 71, 73.

## Patentansprüche

1. Verfahren zur Umsetzung einer Bildfolge von Halbbildern mit Zeilensprung auf eine Bildfolge mit zeilensprungfreien Bildern mit den folgenden Merkmalen:
- die Halbbilder (A1, B1, A2) werden in einem Trennfilter (7) in einen Höhensignalanteil, der die hochfrequenten Bildanteile enthält, und einen Tiefensignalanteil, der die niedrigfrequenten Bildanteile enthält, getrennt,
- der Höhensignalanteil wird in einem ersten Filter (13) gefiltert, der Tiefensignalanteil wird in einem zweiten Filter (14) mit einer im wesentlichen vertikalen Filterwirkung gefiltert,
- der gefilterte Höhensignalanteil und der gefilterte Tiefensignalanteil werden miteinander verknüpft, um Zwischenzeilen zu bilden,
- aus den Zwischenzeilen und einem der Halbbildsignale (B1) wird ein zeilensprungfreies Bild gebildet,
**dadurch gekennzeichnet,**
daß das erste Filter (13) ein zeitlich dominiertes Medianfilter und das zweite Filter (14) ein vertikal dominiertes Medianfilter ist.

2. Verfahren nach Anspruch 1,
**dadurch gekennzeichnet,** daß
durch das Trennfilter (7) die Trennung in Höhensignalanteil und Tiefensignalanteil in vertikaler Halbbildrichtung durchgeführt wird.

3. Verfahren nach Anspruch 1 oder 2,
**dadurch gekennzeichnet,**
daß das eine der Halbbildsignale (B1) zur Bildung des zeilensprungfreien Bildes mit dem Zwischensignal durch eine Verknüpfung (16) des Höhen- und Tiefensignalanteils gebildet wird.

4. Verfahren nach einem der Ansprüche 1 bis 3,
**dadurch gekennzeichnet,**
daß durch das erste Medianfilter (13) ein zu erzeugendes Bildpunktsignal für eine Bildpunktstelle (70), die im Zeilensprung des einen Halbbilds (B1) liegt, erzeugt wird, indem der mittlere Signalwert aus mindestens drei Bildpunkten ausgewählt wird, von denen der erste (72) unmittelbar unterhalb der Stelle (70) des zu erzeugenden Bildpunktsignals des gleichen Halbbildes (B1) liegt, von denen der zweite (71) an der entsprechenden Stelle des zu erzeugenden Bildpunktsignals des unmittelbar vorhergehenden Halbbildes (Al) liegt und von denen der dritte (73) an der entsprechenden Stelle des zu erzeugenden Bildpunktsignals im unmittelbar nachfolgenden Halbbild (A2) liegt.

5. Verfahren nach einem der Ansprüche 1 bis 4,
**dadurch gekennzeichnet,**
daß durch das vertikal dominierte Medianfilter (14) ein zu erzeugendes Bildpunktsignal für eine Bildpunktstelle (60), die im Zeilensprung des einen Halbbilds (B1) liegt, erzeugt wird, indem der mittlere Signalwert aus mindestens drei Bildpunkten (61, 62, 63) ausgewählt wird, von denen der erste (61) in der vorhergehenden Halbbildzeile des gleichen Halbbilds (B1) zur Bildpunktstelle (60) unmittelbar benachbart liegt, von denen der zweite (62) in der darunterliegenden Zeile des gleichen Halbbilds (B1) zur Bildpunktstelle (60) unmittelbar benachbart liegt und von denen der dritte (63) an der entsprechenden Stelle der Bildpunktstelle (60) im unmittelbar darauffolgenden Halbbild (A2) liegt.

6. Schaltungsanordnung mit
- einem Trennfilter (7) zur Trennung von Höhen- und Tiefensignalanteil, dem die Halbbildsignale von mindestens drei aufeinanderfolgenden Halbbildern (A1, B1, B2) zuführbar sind,
- einer Verknüpfungseinrichtung (15), die mit den Ausgängen der Filter (13, 14) verbunden ist und die einen Ausgang für den Zwischenzeilensignalanteil eines zeilensprungfreien Bildes aufweist, und
- Mitteln (19), mit denen der Zwischenzeilensignalanteil und eines der Halbbilder (B1) zu einem zeilensprungfreien Bild verknüpfbar sind.
zur Durchführung des Verfahrens nach einem der Ansprüche 1 bis 5,
**dadurch gekennzeichnet,** daß
- ein im wesentlichen zeitlich wirkendes Medianfilter (13) vorgesehen ist, das mit dem Ausgang (11) des Trennfilters (7) für den Höhensignalanteil verbunden ist,
- ein im wesentlichen vertikal wirkendes Medianfilter (14) vorgesehen ist, das mit dem Ausgang (12) des Trennfilters (7) für den Tiefensignalanteil verbunden ist,

7. Bildwiedergabegerät, enthaltend einen Bildschirm (19) zur Darstellung zeilensprungfreier Bilder, der von einer Schaltungsanordnung nach Anspruch 6 angesteuert wird.

## Claims

1. Method for converting a picture sequence of fields with line interlacing into a picture sequence with pictures without line interlacing, having the following features:
- the fields (A1, B1, A2) are separated into a high-frequency signal component, which contains the high-frequency picture components, and a low-frequency signal component, which contains the low-frequency picture components, in a separation filter (7),
- the high-frequency signal component is filtered in a first filter (13) and the low-frequency signal component is filtered in a second filter (14) with an essentially vertical filter effect,
- the filtered high-frequency signal component and the filtered low-frequency signal component are combined with one another in order to form intermediate lines,
- a picture without line interlacing is formed from the intermediate lines and one of the field signals (B1),
characterized
in that the first filter (13) is a temporally dominated median filter and the second filter (14) is a vertically dominated median filter.

2. Method according to Claim 1,
characterized in that
the separation filter (7) carries out the separation into high-frequency signal component and low-frequency signal component in the vertical field direction.

3. Method according to Claim 1 or 2,
characterized
in that one of the field signals (B1) is formed by combination (16) of the high-frequency and low-frequency signal components for the purpose of forming the picture without line interlacing with the intermediate signal.

4. Method according to one of Claims 1 to 3,
characterized
in that a pixel signal to be generated for a pixel location (70) situated in the line interlacing of one field (B1) is generated by means of the first median filter (13) by the selection of the middle signal value from at least three pixels, the first (72) of which is situated directly below the location (70) of the pixel signal - to be generated - of the same field (B1), the second (71) of which is situated at the corresponding location of the pixel signal - to be generated - of the immediately preceding field (A1), and the third (73) of which is situated at the corresponding location of the pixel signal to be generated in the immediately succeeding field (A2).

5. Method according to one of Claims 1 to 4,
characterized
in that a pixel signal to be generated for a pixel location (60) situated in the line interlacing of one field (B1) is generated by means of the vertically dominated median filter (14) by the selection of the middle signal value from at least three pixels (61, 62, 63), the first (61) of which is directly adjacent to the pixel location (60) in the preceding field line of the same field (B1), the second (62) of which is immediately adjacent to the pixel location (60) in the line of the same field (B1) which is situated below the said pixel location, and the third (63) of which is situated at the corresponding location of the pixel location (60) in the immediately succeeding field (A2).

6. Circuit arrangement having
- a separation filter (7) for separating high-frequency and low frequency signal components, to which the field signals of at least three successive fields (A1, B2, B2) can be fed
- a combination device (15) which is connected to the outputs of the filters (13, 14) and has an output for the intermediate line signal component of a picture without line interlacing, and
- means (19) with which the intermediate line signal component and one of the fields (B1) can be combined to form a picture without line interlacing,
for carrying out the method according to one of Claims 1 to 5,
characterized in that
- a median filter (13) essentially acting in the time domain is provided, which filter is connected to the output (11) of the separation filter (7) for the high-frequency signal component,
- a median filter (14) essentially acting vertically is provided, which filter is connected to the output (12) of the separation filter (7) for the low-frequency signal component.

7. Picture reproduction apparatus, containing a screen (19) for displaying pictures without line interlacing, which is driven by a circuit arrangement according to Claim 6.

## Revendications

1. Procédé pour la conversion d'une séquence d'images de trames entrelacées en une séquence d'images comprenant des images non-entrelacées, qui présente les caractéristiques suivantes :
- les trames (A1, B1, A2) sont séparées, dans un filtre séparateur (7), en une fraction haute de signal qui contient les fractions à haute fréquence de l'image, et une fraction basse de signal qui contient les fractions à basse fréquence de l'image,
- la fraction haute de signal est filtrée dans un premier filtre (13), la fraction basse de signal est filtrée dans un deuxième filtre (14) qui a un effet de filtrage sensiblement vertical,
- la fraction haute de signal filtrée et la fraction basse de signal filtrée sont combinées ensemble pour former des lignes intermédiaires,
- à partir des lignes intermédiaires et d'un des signaux de trame (B1), on forme une image non-entrelacée,
caractérisé
en ce que le premier filtre (13) est un filtre médian à dominante temporelle et le deuxième filtre (14) est un filtre médian à dominante verticale.

2. Procédé selon la revendication 1, caractérisé en ce que la séparation en une fraction haute de signal et une fraction basse de signal est exécutée par le filtre séparateur (7) dans la direction verticale des trames.

3. Procédé selon la revendication 1 ou 2, caractérisé en ce que l'un des signaux de trame (B1) destiné à la formation de l'image non-entrelacée avec le signal intermédiaire est formé par une combinaison (16) de la fraction haute et de la fraction basse de signal.

4. Procédé selon une des revendications 1 à 3, caractérisé en ce que le premier filtre médian (13) produit un signal de point d'image qu'il s'agit de produire pour un emplacement de point d'image (70) qui se trouve dans l'entrelacement d'une des trames (B1), en choisissant la valeur de signal moyenne à partir d'au moins trois points d'images, dont le premier (72) se trouve immédiatement au-dessous de l'emplacement (70) du signal de point d'image de la même trame (B1) qu'il s'agit de produire, dont le deuxième (71) se trouve à l'emplacement correspondant du signal de point d'image à produire qui fait partie de la trame immédiatement précédente (A1), et dont le troisième (73) se trouve à l'emplacement correspondant du signal de point d'image à produire dans la trame immédiatement suivante (A2).

5. Procédé selon une des revendications 1 à 4, caractérisé en ce que le filtre médian (14) à dominante verticale produit un signal de point d'image qu'il s'agit de produire pour un emplacement de point d'image (60) qui se trouve dans l'entrelacement d'une des trames (B1), en choisissant la valeur de signal moyenne à partir d'au moins trois points d'images (61, 62, 63), dont le premier (61) se trouve dans la ligne de trame précédente de la même trame (B1) immédiatement adjacente à l'emplacement du point d'image (60), dont le deuxième (62) se trouve dans la ligne sous-jacente de la même trame (B1), immédiatement adjacente à l'emplacement du point d'image (60), et dont le troisième (63) se trouve à l'emplacement correspondant du point d'image (60) dans la trame immédiatement suivante (A2).

6. Montage comprenant
- un filtre séparateur (7) destiné à séparer des fractions haute et basse de signal, auquel les signaux de trame d'au moins trois trames successives (A1, B1, B2) peuvent être acheminés,
- un dispositif de combinaison (15) qui est connecté aux sorties des filtres (13, 14) et qui présente une sortie pour la fraction ligne intermédiaire du signal d'une image non-entrelacée, et
- des moyens (19) avec lesquels la fraction ligne intermédiaire du signal et l'une des trames (B1) peuvent être combinées pour former une image non-entrelacée,
- pour la mise en oeuvre du procédé selon une des revendications 1 à 5,
caractérisé en ce que
- il est prévu un filtre médian (13) agissant essentiellement dans le temps, qui est connecté à la sortie (11) du filtre séparateur (7) pour la fraction haute de signal,
- il est prévu un filtre médian (14) agissant essentiellement dans la verticale, qui est connecté à la sortie (12) du filtre séparateur (7) pour la fraction basse de signal.

7. Appareil de reproduction d'images, comprenant un écran (19) pour la présentation d'images non-entrelacées, qui est commandée par un montage selon la revendication 6.
